# EUROPEAN PATENT SPECIFICATION

(11) **EP 2 837 485 B1**
(45) Date of publication and mention of the grant of the patent: **05.10.2022**
(21) Application number: 13180391.8
(22) Date of filing: 14.08.2013
(51) Int. Cl.: B29C 48/08, B29C 48/92, B29C 48/31, B29C 48/88

(54) **Method for providing marks on extruded films**
Verfahren zur Markierung von Extrusionsfolien
Procédé pour fournir des marques sur des films extrudés

(43) Date of publication of application: 18.02.2015
(73) Proprietor: Electronic Systems S.p.A., 28015 Momo Novara (IT)
(72) Inventor: Martena, Dr. Florinda, 28015 Momo Novara (IT); Trizzino, Stefano, 28015 Momo Novara (IT)
(74) Representative: Vossius & Partner Patentanwälte Rechtsanwälte mbB

(56) References cited:
- EP-A1- 0 035 356
- DE-A1-102004 039 497
- FR-A1- 2 713 539
- GB-A- 2 178 361
- JP-A- H0 788 934
- JP-A- H1 177 805
- JP-A- S6 135 225
- JP-A- 2000 171 218
- JP-A- 2002 172 679
- JP-A- 2010 167 584
- US-A- 4 255 365
- US-A1- 2009 243 133

## Description

The present invention relates to a method for providing marks on extruded films, in particular on stretched films as well as to a method for automatically detecting marks on extruded films and a method for automatically controlling a film extruder for manufacturing the extruded films.

US-A-5411695 relates to a method for producing a thermoplastic resin film. It particularly deals with a bowing phenomenon which occurs in the process of transverse drawing of the thermoplastic resin film. According to this document the bowing phenomenon can be visualized by drawing straight lines on the surface of the film in the direction of transport. The bowing phenomenon can be reduced by not only considering manufacturing processes and apparatus but also by consideration of the characteristics of the film itself and by applying specific cooling in a cooling zone followed by heat setting of the film.

US-A-3904725 relates to a process for quenching molten thermoplastic film in an apparatus which comprises a movable quenching surface, an extrusion dye positioned above the quenching surface to extrude a polymeric film from the dye onto the quenching surface and lateral point pinning means positioned above the quenching surface and over each lateral edge of the film. It is described that in the preparation of thermoplastic polymeric film using a flat extrusion process, a molten web is cast onto a cool quenching surface. Although the molten sheet may be substantially uniform in thickness as it issues from the parallel dye lips, tension on the free span between the dye and the quenching surface causes a contraction in the width of the film which results in a greatly increased thickness at the edges of the film. It is further stated that the contraction of the web continues through a cooling process. It is therefore suggested to use edge pinning means for stabilizing the film width. By providing a certain direction of additional pinning force at the portion of the lateral edge of the film the preparation of films that do not exhibit marked fluctuations in thickness adjacent the edge can be achieved. As pinning means electrostatic point probes or air jets are used.

US-A-4255365 describes a process for promoting uniform thickness in cast webs of thermoplastic material comprising of variable air forces selectively directed toward a cast web with pinned edges along the line of initial proximity with a quenching surface. The air is provided to the web to provide rapid cooling to specific areas of the casted web. On each lateral side of the casted web one or more air jets can be provided.

JP 2010-167584 A relates to a marking apparatus including a marking nozzle marking a film discharged from a slit formed at a lip of a die of film formation equipment by spraying gas to the film and a fixing implement holding the marking nozzle and fixing the nozzle to a specified position of a heat bolt.

US 2009/243133 A1 relates to controlling caliper variations in polymer films, in particular in extruded, oriented polymer films.

JP H07-88934 A relates to a static electricity applied to the extruded film material by a corona discharge electrode disposed on a cooling drum in the width direction thereof.

JP H11-77805 A relates to a thickness measuring machine using spot beams obtained by throttling transmission infrared rays by lenses to emit infrared spot beams from a measuring spot and measure the quantities of the infrared spot beams attenuated through a film to convert them as the thickness of the film.

JP 2002-172679 A relates to measuring the thickness of the end parts of the sheet by end part thickness gages and that of the product part thereof by a product part thickness gage and, based on the measured values, apertures of end part discharge zones and a product part discharge zone of the die are regulated to make the sheet have an intended thickness.

The before-mentioned documents aim to avoid the bowing phenomenon and thickness variations of the casted film.

The present invention aims to provide a method for providing marks on extruded films, in particular on stretched films. It is a further object of the present invention to provide a method for automatically detecting marks on extruded films. It is a further object of the present invention to provide a method for automatically controlling a film extruder in particular for automatically controlling the thickness of extruded films.

These objects are achieved with the features of the independent claims. The dependent claims relate to further aspects of the present invention.

The present invention is based on a general concept of using one or more nozzle means for directing a gas stream to a surface of the film exiting the extrusion lip of a film extruder. By using a gas stream the extruded film can be locally cooled to create a local mark. The local mark can be detected at a position downstream of the extrusion lip and can then be used for a specific control of the extrusion lip of the film extruder.

Previously marking of a film was made by using for example a wax pen to draw a line on the film. However, for marking the film with a wax pen the pen had to be brought into contact with the surface of the film. This way of marking is quite difficult because on the one hand the film should not be damaged by the contact with the wax pen and on the other hand for drawing a line on the film a certain contact pressure is needed.

Another alternative to mark the film is to intentionally change the thickness at a certain position of the extruded film by changing the width at a certain position of the extrusion lip of the film extruder. However, this type of marking has a high response time and is therefore not convenient.

The present invention has the advantage that by marking the film using one or several gas streams a high response time can be achieved and no contact is necessary for providing the mark.

According to the present invention at least one nozzle means is provided adjacent to the extrusion lip of the film extruder. Preferably the position of each nozzle means has a specific known relationship with one or several adjusting means for example with one or several bolts with which the extrusion lip of the film extruder can be specifically controlled at respective positions along the width of the extrusion lip.

According to an aspect of the present invention an array of a plurality of nozzle means is used, wherein the array is preferably a linear array which is oriented in parallel to the extrusion lip of the film extruder. According to another aspect of the invention the individual nozzle means are arranged at predetermined distances from each other and more preferably at equal distances from each other, preferably equivalent to the width of adjusting means like bolts of a film extruder or a multiple of the bolts.

According to a further aspect of the present invention the nozzle means are configured to blow a gas jet to the surface of the film wherein the gas jet has a predetermined cross section. The gas jet is suitable to provide a local cooling at a part of the film material. As a result the part of the film being cooled by the gas jet has a predetermined dimension, preferably a predetermined diameter or a predetermined width and length.

According to still another aspect of the invention the nozzle means are configured to be arranged in relation to the extrusion lip of the film extruder such that the gas stream can be directed to the local position within at least one border region of the extruded film, i.e. on one or both lateral sides of the extruded film.

According to an aspect of the present invention a frame is provided which is adapted to support a linear array of nozzle means at one or both ends of the extrusion lip of the film extruder. In that case a plurality of gas streams can be directed to either one or both border regions of the extruded film. The one or both linear arrays of gas nozzles are arranged substantially along a line parallel to the extrusion lip of the film extruder.

According to a further aspect of the invention a plurality of nozzle means are arranged in a linear array wherein a number n of nozzle means is preferably in the range 1 to 30, preferably of 2 to 20, more preferably 5 to 10.

According to a further aspect of the invention the nozzle means are arranged in a 1 to m correspondence with respect to individual adjusting means for adjusting the local width of the film extruder for example the bolts present in the film extruder for adjusting the local width. In that case m can preferably be in the range of 1 to 20, more preferably 1 to 5. Thus, in a 1 to m correspondence there is one nozzle means for every m-th individual adjusting means. For example, in case of a 1 to 1 correspondence there is one nozzle means for each individual adjusting means. Alternatively, any arbitrary combination can be used, wherein one nozzle means is arranged at one arbitrarily selected individual adjusting means.

According to a further aspect of the invention control means for controlling the delivery of gas to each one of the nozzle means are provided. More specifically the control means can control the delivery of gas to one, two, three or more individual nozzle means independently or to certain specific groups of nozzle means. For example gas can be delivered at the same time to all nozzle means. Alternatively, gas can be delivered to only one of the nozzle means at a time. By intermittently providing gas to the nozzle means dot like marks can be created. By continuously providing gas for a predetermined time to the nozzle means a linear mark can be created. Depending on whether one, two, three or more or all nozzle means are provided with gas intermittently or continuously an array of dot like marks or an array of linear marks can be created. It is also possible to create after each dot like mark one linear mark or after two or more dot like marks one or more linear marks. The specific pattern of dot like marks and linear marks can be used to distinguish between certain time points of providing marks on the extruded films.

According to another aspect of the present invention the temperature of the gas stream is lower than the temperature of the film which exits from the film extruder. Thus, the gas stream provides a cooling of the film material which results in a detectable mark in the form of a local change of the characteristics of the film, in particular the physical characteristics of the film, preferably a detectable local thickness variation in comparison to other parts of the film which are not cooled by the gas stream. Preferably, due to cooling of a film material the thickness of the film is greater than the thickness of adjacent parts in the neighbour region.

In case the film changes the width after being cast from the extruder the lateral position of the detected marks can be brought into a relation to the lateral position where the mark is created. More specifically if there is only one nozzle means the position where the mark is created on the film can be detected by the detector by detecting for example a thickness variation of the film which results from the gas stream from said nozzle means. The detected position can be brought into a specific relationship to the position of the nozzle means or the position where the mark is created.

The present invention further provides a method for providing marks on extruded films, in particular on stretched films, which are exiting an extrusion lip of a film extruder. This method comprises the step of directing at least one gas stream, preferably an air stream to a surface of the film exiting the extrusion lip of the film extruder in such a manner that the gas stream locally causes a cooling of the extruded film to create a local mark. The present method preferably uses an apparatus for providing marks on extruded films as described above. Thus, for directing a gas stream to the surface of the film a respective nozzle means is used.

According to an aspect of the present invention two or more gas streams are directed to the surface of the film. The gas streams can be switched on and off in such a way that either 1, 2 or more gas streams are active simultaneously or at a different time period. When using an array of plurality of nozzle means, preferably a linear array which is arranged in parallel to the extrusion lip of the film extruder several marks can be created which are placed at predetermined distances from each other. Preferably the marks are at equal distance from each other.

According to a further aspect each gas stream is created by blowing a gas jet to the surface of the film. The gas jet has a predetermined cross-section and preferably the gas jet is suitable to provide a local cooling at a part of the film material, more preferably within a well defined area of the surface of the film material. Preferably, the local cooling is effective through the film material such that the whole material under the well defined area is cooled. As a result the cooled part of the film has a predetermined dimension when seen on the surface of the film, preferably a predetermined diameter or a predetermined width and length. For example, one or several continuous linear marks which are spaced from each other in the lateral direction can be provided on the film.

According to a further aspect the gas stream is directed to a local position within one or both border regions of the film. Alternatively, a plurality of gas streams can be directed to one or both border regions of the film. In such a way, several marks can be created on both lateral sides of the film which are arranged along a line parallel to the extrusion lip of the film extruder.

According to another aspect of the invention a plurality of nozzle means, i.e. a number n of nozzle means are arranged in a linear array. Such a linear array can be provided on both border regions of the film. The arrangement of the nozzle means is preferably in a 1 to m correspondence with respect to individual adjusting means of the film extruder. Such adjusting means are configured to adjust the local width of the film extruder so that the thickness of the film extruded from the film extruder can be adjusted. Preferably the number of nozzle means is the same as the number of adjusting means. Thus, there is a 1 to 1 correspondence. Alternatively, one nozzle means is provided for every m-th adjusting means with m being in the range of 1 to 20, more preferably 1 to 5. Any arbitrary combination of each one nozzle means with an arbitrary selected individual adjusting means can also be used.

According to a further aspect the delivery of gas is controlled to each one of the nozzle means independently. The gas can be provided intermittently to one or more of the plurality of nozzle means or even to all nozzle means at the same time. In this way, an array of dot like marks can be created by quickly switching on and off the gas stream. In addition or alternatively, the gas can be continuously provided for a predetermined time to one or more or all nozzle means. In that case an array of linear marks can be created. The length of the linear marks depends on the ON-time on the gas supply and the speed with which the film is moving from the film extruder to a chilling roll downstream of the film extruder.

According to a further aspect the temperature of the gas is controlled to be lower than the temperature of the film exiting the film extruder. The temperature difference is selected in such a manner that the cooling of the film material results in a detectable mark in the form of a local change of the characteristics of the film, preferably a detectable local thickness variation in comparison to other parts of the film not being cooled by the gas stream. More specifically, the local thickness variation can be a greater thickness in parts of the film which are cooled by the gas stream. When exiting the extrusion lip the film has a certain temperature and when being transported to a first chill roll thermal contraction of the film occurs resulting in a neck-in portion. The gas stream causes a local cooling of the film that comes out of the extrusion lip which results in a specific thickness at this part of the film.

According to another aspect of the present invention these marks on the extruded films are automatically detected by using a detector preferably a gauging instrument for measuring the thickness of the film. For example, a measurement sensor head detects thickness peaks at predetermined positions that are associated to respective positions where the gas stream cools the film. The lateral position of the detected marks is in a specific relation to a reference position for example to one or both edges of the film.

According to another aspect of the present invention a method for automatically controlling a film extruder in particular for automatically controlling the thickness of extruded films, in particular of stretched films uses the before-described method for marking and the before-described method for detecting marks on a film. It further comprises the step of measuring the thickness of the film over the whole width using a gauging instrument and of controlling individual adjusting means of a film extruder on the basis of the measurement results of the gauging instrument and the information of the lateral position of the marks by using further control means.

Air blow marking can be performed in cycles which are started either manually by an operator or which can be started automatically in case of events which are significant in the manufacturing process. In particular, if events are significant on the neck-in effect for example a change of production, a change of the width of the film, a change of the distance between the dye and the chill roll or a change of vacuum box conditions a cycle of air blow marking according to the present invention can be performed.

### Brief description of Figures

The present invention will now be explained with reference to preferred embodiments and the drawings, in which:
Fig. 1 shows a schematic perspective view of a system for manufacturing films comprising an apparatus for providing marks on films not part of the invention.
Fig. 2 shows a schematic side view of a system as shown in Figure 1,
Fig. 3 shows a schematic diagram as a top view on the extruded film in the system of Figure 1 and
Fig. 4 shows a schematic diagram of the measurement result representing the thickness variation resulting from marks created on an extruded film.

### Detailed description of the invention

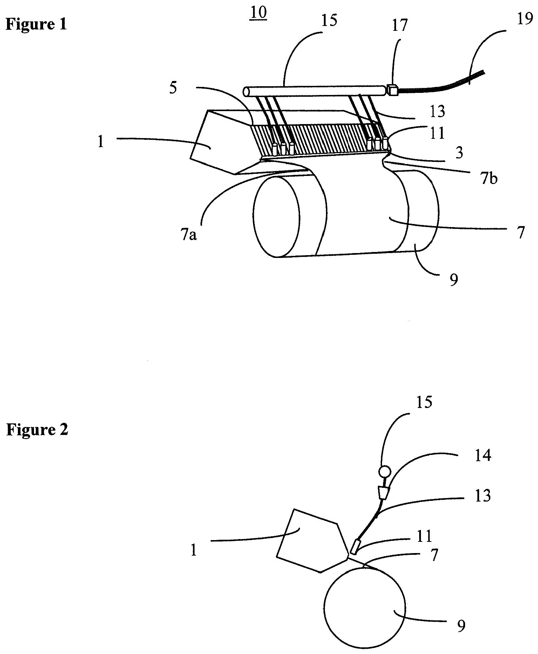

Fig. 1 shows a schematic view of a system which comprises an apparatus for creating marks not being part of the invention. Figure 1 shows a film extruder 1 comprising an elongated extrusion lip 3 and a plurality of adjusting means 5 being arranged adjacent to each other along the width of the extrusion lip. The adjusting means 5 can comprise respective bolts, and the adjusting means can be used for changing the width of the extrusion lip 3 and more specifically wherein individual adjustments can be made to adjust the thickness individually at specific parts of the extrusion lip. Figure 1 further schematically shows an extruded film 7 which exits the extrusion lip 3 and which is rolled on a chill roll 9. As further schematically shown in Figure 1 the extruded film has a wider width at the exit of the film extruder which substantially corresponds to the width of the extrusion lip 3. Due to a thermal contraction the width of the extruded film is smaller when reaching the chill roll 9. More specifically, due to this thermal contraction the extruded film comprises on the left lateral side a neck-in portion 7a and on the right lateral side a neck-in portion 7b.

Fig. 1 further schematically shows the apparatus 10 for providing marks on the extruded film. The apparatus 10 comprises a plurality of nozzles 11 which are arranged close to the extrusion lip and directed to the top surface of the film. Fig. 1 schematically shows three nozzles 11 on both lateral sides of the extruded film. In this example, each nozzle 11 is connected via a respective line 13 to a manifold 15. The manifold 15 for distributing gas to the several lines 13 is connected at one end via an electro valve 17 to a compressed air supply 19. The compressed air supply 19 can be connected to a compressor (not shown) for supplying the compressed air. The apparatus 10 comprising the nozzle 11 can be supported by a first frame which is arranged above the extrusion lip 3.

As shown in the side view of Fig. 2 one air regulator 14 can be provided for each line 13 connecting one nozzle 11 with the manifold 15. As schematically shown in Figures 1 and 2 the nozzles are arranged along a line parallel to the extrusion lip 3. The tip end of the nozzle 11 is arranged adjacent to a respective adjusting means 5 of the film extruder 1. In the example of Fig. 1 three nozzles 11 are arranged on both lateral sides of the film, i.e. in a border region of the film. More specifically, as schematically shown the outer most nozzle 11 is arranged on the left side at a specific distance from the left end of the extrusion lip, i.e. it is placed close to the fourth adjusting means from the left side of the extrusion lip. The second and third neighbour nozzle is arranged at equal distances such that the second nozzle 11 is arranged adjacent to the sixth adjusting means 5 and the third nozzle 11 is arranged close to the eighth adjusting means 5. The other three nozzles are similarly arranged on the right lateral side of the extrusion lip. Thus, there is a 1 to 2 correspondence between the number of nozzles on both lateral sides and the respective number of adjusting means in these border regions. This is just an example. Any arbitrary combination can be used, for example, a first nozzle is arranged at the second adjusting means, a second nozzle is arranged at the fifth adjusting means, a third nozzle is arranged at the tenth adjusting means and the fourth nozzle is arranged at the twentieth adjusting means. The arrangement on the other lateral side can be mirror-symmetric but also non-symmetric.

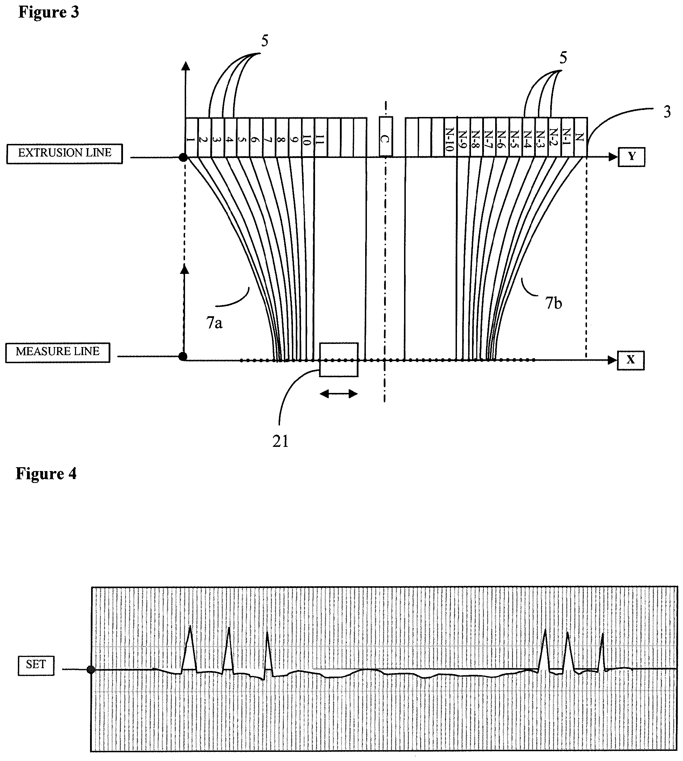

Fig. 3 schematically shows a top view of an extruded film coming out from the extrusion lip 3 wherein between the extrusion line Y and a measurement line X a neck-in portion 7a is formed on the left side and a neck-in portion 7b is formed on the right side of the schematic drawing of Fig. 3. Fig. 3 illustrates that the contraction of the film specifically occurs along the border region of a film on both lateral sides. Fig. 3 further shows schematically a number N of adjusting means 5 designated with numbers 1, 2, 3 to 11 and N-10, N-9 to N. In the middle region between the adjusting means 10 to N-9 substantially no thermal contraction occurs. This is again an example. The numbers depend for example on the width of the neck-in area or production and line conditions like viscosity of the material or mechanical dimensions of the production line. The total number of adjusting means N may be in the range of 30 to 350. Therefore, in Fig. 3 both lateral sides are shown in an enlarged manner. As can be seen the width of the film along the extrusion line is wider than the width along the measurement line. As can be further seen there is a specific relation of the position of the part of the film exiting for example the adjustment means 1, i.e. the position along the axis Y and the respective position of this part of the film along the measurement line which corresponds to a position along the axis X. In other words, there is a specific function y=f(x). Those parts which exit the extrusion lip 3 at a particular individual adjusting means 5 can be marked with the present system by blowing air to the surface of the film. By using an array of air blows located above the adjusting means, i.e. the bolts on both lateral sides of the film extruder local film cooling can be caused. The air flow can be simultaneously or individually be directed to the surface of the film such that the film coming out of the extrusion lip 3 is cooled and as a consequence a mark is created on the film having a specific thickness.

By using a measurement sensor head 21 along the measurement line X the thickness can be measured and the marks can be detected. This measurement sensor head can move back and forth along the measurement line X to measure the thickness of the film over its whole width. For example, a second frame (not shown) may be arranged above the measurement line X along which the measurement sensor head traverses.

As schematically shown in Fig. 4 the film thickness profile comprises three peaks on both sides wherein one peak corresponds to a respective mark detected by the measurement sensor head 21. The thickness peaks schematically shown in Fig. 4 correspond to linear marks created on respective parts of the film when exiting the extrusion lip. More specifically these marks correspond to respective adjusting means 5 where a nozzle 11 directs a gas stream on the surface of the extruded film.

These data can be processed to adjust the function y=f(x) in a way that gives more accuracy in the characterization of the real film contraction. The air blow marking cycle can be initiated manually or automatically. The air blow marking can be used continuously or in the case of events which are significant on the manufacturing of the extruded film in particular significant on the neck-in effect. For example, in case of a change of production, a change of the width of the film, a change of the distance between the dye and the chill roll and a change of vacuum box conditions the air blow marking cycle can be initiated.

## Claims

1. A method for providing marks on extruded films (7), in particular on stretched films (7), which are exiting an extrusion lip (3) of a film extruder (1), comprising the step of:
directing at least one gas stream, preferably an air stream to a surface of the film (7) exiting the extrusion lip (3) of the film extruder (1) using at least one nozzle means (11), in such a manner that the gas stream locally causes a cooling of the extruded film (7) to create a local mark;
controlling the delivery of gas to each one of the at least one nozzle means (11) by using control means,
**characterised in that**
gas is intermittently provided to at least one or to a specific number of the at least one nozzle means (11) or to all nozzle means (11) to create an array of dot like marks.

2. Method according to claim 1, comprising the further step of:
directing two or more gas streams to the surface of the film (7) either simultaneously or at different time periods by using an array of a plurality of nozzle means (11), wherein the array is preferably a linear array and further preferably wherein the plurality of nozzle means (11) are arranged at predetermined distances from each other, more preferably at equal distances from each other.

3. Method according to claim 1 or 2, wherein the step of directing a gas stream comprises:
blowing a gas jet to the surface of the film (7), the gas jet having a predetermined cross-section and further preferably the gas jet being suitable to provide a local cooling at a part of the film material (7), wherein the part has a predetermined dimension, preferably a predetermined diameter or a predetermined width and length.

4. Method according to any one of claims 1 to 3, wherein the step of directing a gas stream comprises:
directing the gas stream to a local position within one or both border regions of the film (7), preferably further comprising the steps of:
directing a plurality of gas streams to one or both border regions of the film (7),
wherein one or two linear arrays of gas nozzles (11) are arranged substantially along a line parallel to the extrusion lip (3) of the film extruder (1) using a frame which is adapted to support the linear array of nozzle means (11) at one or both ends of the extrusion lip (3) of a film extruder (1).

5. Method according to any one of claims 1 to 4, further comprising:
providing n nozzle means (11) being arranged in a linear array, wherein n is preferably in the range of 1 to 30, preferably 2 to 20, more preferably 5 to 10 and further preferably wherein the nozzle means (11) being arranged in a 1 to m correspondence with respect to individual adjusting means (5) for adjusting the local width of the film extruder (1), wherein preferably m is in the range of 1 to 20 and more preferably 1 to 5.

6. Method according to any one of claims 1 to 5, further comprising:
controlling the temperature of the gas to be lower than the temperature of the film (7) exiting the film extruder (1) and wherein preferably the cooling of the film material (7) results in a detectable mark in the form of a local change of a characteristics of the film (7), preferably a detectable local thickness variation in comparison to other parts of the film (7) not being cooled by the gas stream.

7. A method for automatically detecting marks on extruded films (7), in particular on stretched films (7), comprising:
detecting marks on the film (7), wherein the marks are in the form of detectable thickness variations of the film (7) by using a detector, wherein the detector comprises a gauging instrument for measuring the thickness of the film (7), wherein the marks are created using a method according to any one of claims 1 to 6, and
determining the lateral position of the detected marks in relation to one or both edges of the film (7) by using determining means.

8. A method for automatically controlling a film extruder (1) in particular for automatically controlling the thickness of extruded films (7), in particular of stretched films (7), comprising:
a method according to any one of claims 1 to6,
a method for detecting marks and for providing information of the lateral position of the marks preferably according to claim 7,
measuring the thickness of the film (7) using a gauging instrument,
and controlling individual adjusting means (5) for adjusting the local width of the film extruder (1) on the basis of measurement results of the gauging instrument and the information of the lateral position of the marks by using further control means.

## Patentansprüche

1. Verfahren zum Bereitstellen von Markierungen auf extrudierten Folien (7), insbesondere auf gestreckten Folien (7), die aus einer Extrusionslippe (3) eines Folienextruders (1) austreten, das den Schritt aufweist:
Richten mindestens eines Gasstroms, vorzugsweise eines Luftstroms, auf eine Oberfläche der Folie (7), die aus der Extrusionslippe (3) des Folienextruders (1) austritt, unter Verwendung mindestens einer Düseneinrichtung (11) in einer solchen Weise, dass der Gasstrom lokal eine Abkühlung der extrudierten Folie (7) bewirkt, um eine lokale Markierung zu erzeugen;
Steuern der Gaszufuhr zu jeder der mindestens einen Düseneinrichtung (11) unter Verwendung einer Steuereinrichtung,
**dadurch gekennzeichnet, dass**
Gas intermittierend mindestens einer oder einer bestimmten Anzahl der mindestens einen Düseneinrichtung (11) oder allen Düseneinrichtungen (11) zugeführt wird, um eine Anordnung von punktartigen Markierungen zu erzeugen.

2. Verfahren nach Anspruch 1, das die weiteren Schritt aufweist:
Richten von zwei oder mehr Gasströmen auf die Oberfläche der Folie (7) entweder gleichzeitig oder in unterschiedlichen Zeitspannen unter Verwendung einer Anordnung von mehreren Düseneinrichtungen (11), wobei die Anordnung vorzugsweise eine lineare Anordnung ist und wobei ferner vorzugsweise die mehreren Düseneinrichtungen (11) in vorbestimmten Abständen voneinander, besonders bevorzugt in gleichen Abständen voneinander, angeordnet sind.

3. Verfahren nach Anspruch 1 oder 2, wobei der Schritt des Richtens eines Gasstroms aufweist:
Blasen eines Gasstrahls auf die Oberfläche der Folie (7), wobei der Gasstrahl einen vorbestimmten Querschnitt aufweist und ferner bevorzugt der Gasstrahl geeignet ist, eine lokale Kühlung an einem Teil des Folienmaterials (7) bereitzustellen, wobei der Teil eine vorbestimmte Abmessung, vorzugsweise einen vorbestimmten Durchmesser oder eine vorbestimmte Breite und Länge aufweist.

4. Verfahren nach einem der Ansprüche 1 bis 3, wobei der Schritt des Richtens eines Gasstroms aufweist:
Richten des Gasstroms auf eine lokale Position innerhalb eines oder beider Randbereiche der Folie (7), das vorzugsweise ferner die Schritte aufweist:
Richten von mehreren Gasströmen auf einen oder beide Randbereiche der Folie (7),
wobei eine oder zwei lineare Anordnungen von Gasdüsen (11) im Wesentlichen entlang einer Linie parallel zur Extrusionslippe (3) des Folienextruders (1) angeordnet sind, unter Verwendung eines Rahmens, der eingerichtet ist, um die lineare Anordnung der Düseneinrichtungen (11) an einem oder beiden Enden der Extrusionslippe (3) eines Folienextruders (1) zu halten.

5. Verfahren nach einem der Ansprüche 1 bis 4, das ferner aufweist:
Bereitstellen von n Düseneinrichtungen (11), die in einer linearen Anordnung angeordnet sind, wobei n vorzugsweise im Bereich von 1 bis 30, vorzugsweise 2 bis 20, besonders bevorzugt 5 bis 10 liegt, und wobei die Düseneinrichtungen (11) ferner vorzugsweise in einer 1 zu m-Entsprechung in Bezug auf einzelne Einstelleinrichtung (5) zum Einstellen der lokalen Breite des Folienextruders (1) angeordnet sind, wobei m vorzugsweise im Bereich von 1 bis 20 und besonders bevorzugt 1 bis 5 liegt.

6. Verfahren nach einem der Ansprüche 1 bis 5, das ferner aufweist:
Steuern der Temperatur des Gases so, dass sie niedriger ist als die Temperatur der aus dem Folienextruder (1) austretenden Folie (7), und wobei vorzugsweise die Kühlung des Folienmaterials (7) zu einer erfassbaren Markierung in Form einer lokalen Änderung einer Eigenschaft der Folie (7) führt, vorzugsweise einer erfassbaren lokalen Dickenänderung im Vergleich zu anderen Teilen der Folie (7), die nicht durch den Gasstrom gekühlt werden.

7. Verfahren zum automatischen Erkennen von Markierungen auf extrudierten Folien (7), insbesondere auf gestreckten Folien (7), das aufweist:
Erfassen von Markierungen auf der Folie (7), wobei die Markierungen in Form von erfassbaren Dickenänderungen der Folie (7) vorliegen, unter Verwendung eines Detektors, wobei der Detektor ein Messinstrument zum Messen der Dicke der Folie (7) aufweist, wobei die Markierungen unter Verwendung eines Verfahrens nach einem der Ansprüche 1 bis 6 erzeugt werden, und
Bestimmen der seitlichen Position der erfassten Markierungen in Bezug auf eine oder beide Kanten der Folie (7) unter Verwendung einer Bestimmungseinrichtung.

8. Verfahren zum automatischen Steuern eines Folienextruders (1), insbesondere zum automatischen Steuern der Dicke von extrudierten Folien (7), insbesondere von gestreckten Folien (7), das aufweist:
ein Verfahren nach einem der Ansprüche 1 bis 6,
ein Verfahren zum Erfassen von Markierungen und zum Bereitstellen von Informationen über die seitliche Position der Markierungen, vorzugsweise nach Anspruch 7,
Messen der Dicke der Folie (7) mit einem Messinstrument,
und Steuern einzelner Verstelleinrichtungen (5) zum Verstellen der lokalen Breite des Folienextruders (1) auf der Basis von Messergebnissen des Messinstruments und der Information über die seitliche Lage der Markierungen unter Verwendung einer weiteren Steuereinrichtung.

## Revendications

1. Procédé d'exécution de marques sur des films extrudés (7), en particulier sur des films étirés (7) sortant d'une lèvre d'extrusion (3) d'une extrudeuse de films (1), comprenant l'étape
de guidage d'au moins un flux gazeux, préférentiellement un flux d'air, vers une surface du film (7) sortant de la lèvre d'extrusion (3) de l'extrudeuse de films (1) au moyen d'au moins une unité de buse (11), de telle manière que le flux gazeux provoque localement un refroidissement du film extrudé (7) pour générer une marque locale ;
de commande du refoulement de gaz vers chaque buse de ladite au moins une unité de buse (11) au moyen d'une unité de commande,
**caractérisé en ce que**
le gaz est refoulé de manière intermittente vers au moins une buse, ou vers un nombre spécifique de ladite au moins une unité de buse (11), ou vers toutes les unités de buse (11) pour générer un réseau de marques en forme de pastilles.

2. Procédé selon la revendication 1, comprenant l'autre étape
de guidage d'au moins deux flux gazeux vers la surface du film (7), soit simultanément, soit à des moment différents, au moyen d'un réseau d'une pluralité d'unités de buse (11), ledit réseau étant avantageusement un réseau linéaire, préférentiellement où la pluralité d'unités de buse (11) sont disposées à des distances définies l'une de l'autre, tout particulièrement à distance égale l'une de l'autre.

3. Procédé selon la revendication 1 ou la revendication 2, où l'étape de guidage d'un flux gazeux comprend :
la projection d'un jet de gaz à la surface du film (7), ledit jet de gaz ayant une section transversale définie et le jet de gaz étant en outre avantageusement adapté pour assurer un refroidissement local sur une partie du matériau de film (7), ladite partie présentant une dimension définie, préférentiellement un diamètre défini ou une largeur et une longueur définies.

4. Procédé selon l'une des revendications 1 à 3, où l'étape de guidage d'un flux gazeux comprend :
le guidage du flux gazeux vers un emplacement local à l'intérieur d'une zone de bordure, ou des deux zones de bordure du film (7), comprenant en outre préférentiellement les étapes
de guidage d'une pluralité de flux gazeux vers une zone de bordure, ou les deux zones de bordure du film (7),
où un ou deux réseaux linéaire de buses de gaz (11) sont disposées sensiblement sur une ligne parallèle à la lèvre d'extrusion (3) de l'extrudeuse de films (1) au moyen d'un cadre adapté pour supporter le réseau linéaire d'unités de buse (11) à une extrémité, ou aux deux extrémités de la lèvre d'extrusion (3) d'une extrudeuse de films (1).

5. Procédé selon l'une des revendications 1 à 4, comprenant en outre :
la préparation de n unités de buse (11) disposées en réseau linéaire, où n est avantageusement compris entre 1 et 30, préférentiellement entre 2 et 20, plus particulièrement entre 5 et 10, et tout particulièrement où l'unité de buse (11) est disposée en correspondance de 1 à m par rapport à une unité de réglage individuelle (5) pour le réglage de la largeur locale de l'extrudeuse de films (1), m étant avantageusement compris entre 1 et 20 et préférentiellement entre 1 et 5.

6. Procédé selon l'une des revendications 1 à 5, comprenant en outre :
la commande d'une température de gaz inférieure à la température du film (7) sortant de l'extrudeuse de films (1), et où le refroidissement du matériau de film (7) aboutit avantageusement à une marque détectable sous la forme d'un changement local d'une caractéristique du film (7), préférentiellement une variation d'épaisseur locale détectable en comparaison avec d'autres parties du film (7) non refroidies par le flux gazeux.

7. Procédé de détection automatique de marques sur des films extrudés (7), en particulier sur des films étirés (7), comprenant :
la détection de marques sur le film (7), lesdites marques se présentant sous la forme de variations d'épaisseur du film détectables (7) au moyen d'un détecteur, ledit détecteur comprenant un appareil de mesure destiné à mesurer l'épaisseur du film (7), les marques étant générées au moyen d'un procédé selon l'une des revendications 1 à 6, et
la détermination de position latérale des marques détectées en relation avec un bord ou les deux bords du film (7) au moyen d'une unité de détermination.

8. Procédé de commande automatique d'une extrudeuse de films (1), en particulier de commande automatique de l'épaisseur de films extrudés (7), en particulier de films étirés (7), comprenant :
un procédé selon l'une des revendications 1 à 6,
un procédé de détection de marques et de délivrance d'informations sur la position latérale des marques, préférentiellement selon la revendication 7,
la mesure de l'épaisseur du film (7) au moyen d'un appareil de mesure,
et la commande d'une unité de réglage individuelle (5) pour régler la largeur locale de l'extrudeuse de films (1) sur la base de résultats de mesure de l'appareil de mesure et des informations de position latérale des marques au moyen d'une autre unité de commande.
